# EUROPEAN PATENT APPLICATION

(11) **EP 4 401 224 A1**
(43) Date of publication of application: **17.07.2024**
(21) Application number: 23752275.0
(22) Date of filing: 01.02.2023
(51) Int. Cl.: H01M 50/383

(54) **ENERGY STORAGE SYSTEM**

(30) Priority: 11.02.2022 CN 202220281281 U
(71) Applicant: Contemporary Amperex Technology Co., Limited, Ningde, Fujian 352100 (CN)
(72) Inventor: WANG, Xuehui, Ningde, Fujian 352100 (CN); GAO, Xiongwei, Ningde, Fujian 352100 (CN); CHEN, Xiaobo, Ningde, Fujian 352100 (CN)
(74) Representative: Behr, Wolfgang
(86) International application number: PCT/CN2023/074112
(87) International publication number: WO 2023/151495

(57) **Abstract**

The present application relates to an energy storage system. The energy storage system includes a housing, a detection component, an air intake fan, and an air exhaust fan. The housing is provided with an air inlet and an air outlet. The detection component is coupled to the housing and is configured to detect a concentration of combustible gas within the housing. The air intake fan and the air exhaust fan are both coupled to the housing. The air intake fan drives external airflow to enter the housing through the air inlet, and the air exhaust fan drives airflow within the housing to exit the housing through the air outlet. Both the air intake fan and the air exhaust fan are configured to start up when the concentration of combustible gas reaches or exceeds a minimum value of a specified range. The energy storage system provided in this application can improve the discharge efficiency of combustible gas.

## Description

### CROSS-REFERENCE TO RELATED APPLICATIONS

This application refers to China Patent Application No. 202220281281.2, filed on February 11, 2022 and entitled "ENERGY STORAGE SYSTEM", which is incorporated here by reference in its entirety.

### TECHNICAL FIELD

This application relates to the field of battery technologies and particularly to an energy storage system.

### BACKGROUND

Currently, with the development of society and economy, energy storage systems composed of a housing and multiple battery modules housed within the housing have been widely used in electric vehicles, military equipment, and aerospace equipment.

When a battery module experiences a thermal runaway, in order to prevent accumulation of combustible gas within the housing and occurrence of an explosion, it is necessary to monitor the concentration of combustible gas in real time and promptly discharge the combustible gas from the housing when its concentration reaches a specified level.

However, in traditional energy storage systems, when a battery module experiences a thermal runaway, the discharge efficiency of combustible gas from the housing is relatively low. As a result, the energy storage system is still at risk of explosion.

### SUMMARY

In view of this, in response to the foregoing problem of low discharge efficiency of combustible gas, it is necessary to provide an energy storage system that can improve the discharge efficiency of combustible gas.

The energy storage system includes:
a housing with an air inlet and an air outlet;
a detection component, coupled to the housing and configured to detect a concentration of combustible gas within the housing; and
an air intake fan and an air exhaust fan, both coupled to the housing, where the air intake fan is configured to drive external airflow into the housing through the air inlet, and the air exhaust fan is configured to drive airflow within the housing out through the air outlet;
where the air intake fan and the air exhaust fan are both configured to start up when the concentration of combustible gas reaches or exceeds a minimum value of a specified range.

In the foregoing energy storage system, during an energy supply process of the energy storage system, the detection component detects the concentration of combustible gas inside the housing in real time. When the concentration of combustible gas reaches or exceeds the minimum value of the specified range, both the air intake fan and the air exhaust fan start up. The air intake fan drives external airflow into the housing, and the air exhaust fan guides airflow and the combustible gas within the housing to be discharged to the outside. The presence of the air intake fan and the air exhaust fan can accelerate the discharge of the combustible gas from the housing, improving the discharge efficiency.

In one embodiment, the energy storage system includes a controller. The controller is configured to control the start-up of the air intake fan and the air exhaust fan when the concentration of combustible gas reaches or exceeds the minimum value of the specified range.

In this embodiment, due to the presence of the controller, the operation of the entire energy storage system does not require manual monitoring, thereby facilitating realization of automated explosion prevention for the energy storage system.

In one embodiment, the energy storage system includes a fire extinguishing component, which is coupled to the housing and electrically connected to the controller.

The controller is configured to control the fire extinguishing component to perform a fire extinguishing operation within the housing when the concentration of combustible gas exceeds a maximum value of the specified range.

When a thermal runaway occurs in a battery module within the housing, the concentration of combustible gas inside the housing may exceed the maximum value of the specified range, which can easily lead to an explosion and combustion of the battery module. By setting the controller to control the fire extinguishing component to perform the fire extinguishing operation within the housing, the fire in the housing can be effectively and promptly controlled and temperature in the housing can be reduced, so as to prevent the fire from spreading and causing a serious safety incident.

In one embodiment, the housing further includes an open-close door positioned at the air inlet and/or the air outlet. The open-close door is configured to open the corresponding air inlet and/or air outlet when the concentration of combustible gas reaches or exceeds the minimum value of the specified range.

When the energy storage system is properly supplying power, all the open-close doors remain closed, collectively preventing external moisture, dust, and the like from entering the housing, so as to avoid the moisture and dust affecting the operation of the battery module. When the concentration of combustible gas inside the housing reaches or exceeds the minimum value of the specified range, all the open-close doors open to ensure an airflow exchange between the inside and outside of the housing. Therefore, the opening and closing of the open-close door based on the concentration of combustible gas inside the housing ensures a proper power supply of the energy storage system and its airflow exchange with the external environment.

In one embodiment, the energy storage system further includes a sealing component. The sealing component is positioned around an outer periphery of the air inlet and/or air outlet having the open-close door. The sealing component seals between the housing and the open-close door at the air inlet and/or air outlet where the sealing component is currently located when the concentration of combustible gas is below the minimum value of the specified range.

When the energy storage system is properly supplying power, the concentration of combustible gas inside the housing is below the minimum value of the specified range. The housing and the open-close door positioned at the air inlet and/or the air outlet are sealed using the sealing component to prevent external moisture and dust from entering the housing. When the concentration of combustible gas inside the housing reaches or exceeds the maximum value of the specified range, all the open-close doors open, and the sealing component loses its sealing function.

In one embodiment, a surface of the housing is provided with a slot, the slot being arranged around an outer periphery of the sealing component. The open-close door includes a door body and a flange protruding from one side of the door body. The flange is engaged within the corresponding slot when the open-close door is closed relative to the air inlet or air outlet where the open-close door is currently located.

The cooperation between the flange and the slot further enhances the close cooperation between the open-close door where the flange is located and the housing, ensuring that the sealing component corresponding to the open-close door can securely clamp between the door body of the open-close door and the housing.

In one embodiment, depth of the slot is greater than width of the corresponding flange.

Therefore, when each open-close door closes the corresponding air inlet or air outlet, the flange in the open-close door can be fully engaged within the corresponding slot. This ensures a reliable cooperation between the flange and the slot, preventing the flange from disengaging from the slot.

In one embodiment, an insulation layer is provided on a surface of each open-close door facing the air inlet or air outlet.

The presence of the insulation layer significantly reduces the speed at which heat from the housing diffuses to the outside through each open-close door. As a result, the housing can maintain a suitable temperature for the battery module to properly supply power.

In one embodiment, the energy storage system further includes a magnetic component, and the open-close door is configured to be magnetically attracted to the housing under an action of the corresponding magnetic component.

Therefore, each open-close door can reliably close the air inlet or the air outlet.

In one embodiment, the housing includes a housing body, a partition plate, an exhaust duct, and a blocking door, where the partition plate divides the housing body into an electrical compartment and a battery compartment; and
the partition plate is provided with a communicating opening, the exhaust duct passes through the communicating opening, the electrical compartment, and the air outlet in sequence and communicates with the battery compartment and the outside, and the blocking door is coupled to the partition plate and is configured to open and close the communicating opening.

The housing body has an accommodation compartment, and the partition plate is located within the accommodation compartment to divide the accommodation compartment into the electrical compartment and the battery compartment. The detection component is configured to detect the concentration of combustible gas within the battery compartment, and the controller is configured to open and close the blocking door. When the concentration of combustible gas within the battery compartment is below the minimum value of the specified range, the controller controls the blocking door to close, isolating the electrical compartment and the battery compartment from each other. The battery module supplies power within the battery compartment, and electrical components operate within the electrical compartment, with no interference between the battery module and the electrical components. When the concentration of combustible gas within the battery compartment reaches or exceeds the minimum value of the specified range, the controller controls the blocking door to open, allowing the combustible gas within the battery compartment to be discharged to the outside through the exhaust duct and the air outlet.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like parts are represented by like reference symbols. In the accompanying drawings:
FIG. 1 is a schematic structural diagram of an energy storage system without a cladding layer covering its frame, according to an embodiment of the present application;
FIG. 2 is a schematic structural diagram of a battery module in the energy storage system shown in FIG. 1;
FIG. 3 is a front cross-sectional view of a housing body, a partition plate, an exhaust duct, an air exhaust fan, and an open-close door at working in the energy storage system shown in FIG. 1;
FIG. 4 is an exploded view of the housing body, the partition plate, the exhaust duct, the air exhaust fan, and the open-close door at working in the energy storage system shown in FIG. 1;
FIG. 5 is a schematic structural diagram of a housing body, a sealing component, an air intake fan, and an open-close door at working in the energy storage system shown in FIG. 1;
FIG. 6 is a cross-sectional view of the energy storage system shown in FIG. 5 along a direction A-A; and
FIG. 7 is an enlarged schematic diagram of a local structure B in the energy storage system shown in FIG. 6.

Reference signs:
1. energy storage system; 10. housing; 11. housing body; 111. accommodation compartment; 112. air inlet; 113. air outlet; 114. slot; 115. electrical compartment; 116. battery compartment; 117. frame; 12. open-close door; 121. door body; 122. flange; 123. insulation layer; 13. partition plate; 131. communicating opening; 14. exhaust duct; 15. blocking door; 20. air intake fan; 30. air exhaust fan; 40. controller; 50. sealing component; 51. notch; 60. magnetic component; 70. battery module; 71. battery cell; 72. box; 721. first part; and 722. second part.

### DESCRIPTION OF EMBODIMENTS

To make the objectives, features and advantages of this application more comprehensible, the following further describes specific implementations of this application in detail with reference to the accompanying drawings. In the following descriptions, numerous specific details are set forth in order to provide a thorough understanding of this application. However, this application can be implemented in many other ways different from those described herein, and those skilled in the art can make similar improvements without violating the connotation of this application. Therefore, this application is not limited by the specific embodiments disclosed below.

In the descriptions of this application, it should be understood that the orientations or positional relationships indicated by the terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships shown in the accompanying drawings. They are merely intended to facilitate the descriptions of this application and simplify the descriptions, but are not intended to indicate or imply that the means or components mentioned in this application must have specific orientations, or be constructed and operated according to a specific orientation, and therefore shall not be construed as a limitation on this application.

In addition, the terms "first" and "second" are merely intended for a purpose of description, and shall not be understood as an indication or implication of relative importance or implicit indication of the number of indicated technical features. Therefore, a feature defined by "first" or "second" may explicitly or implicitly include at least one such feature. In the description of this application, the meaning of "a plurality of' is at least two, for example two or three, unless otherwise specifically defined.

In this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements, unless otherwise defined explicitly. A person of ordinary skills in the art can understand specific meanings of these terms in this application as appropriate to specific situations.

In this application, unless otherwise clearly specified and limited, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

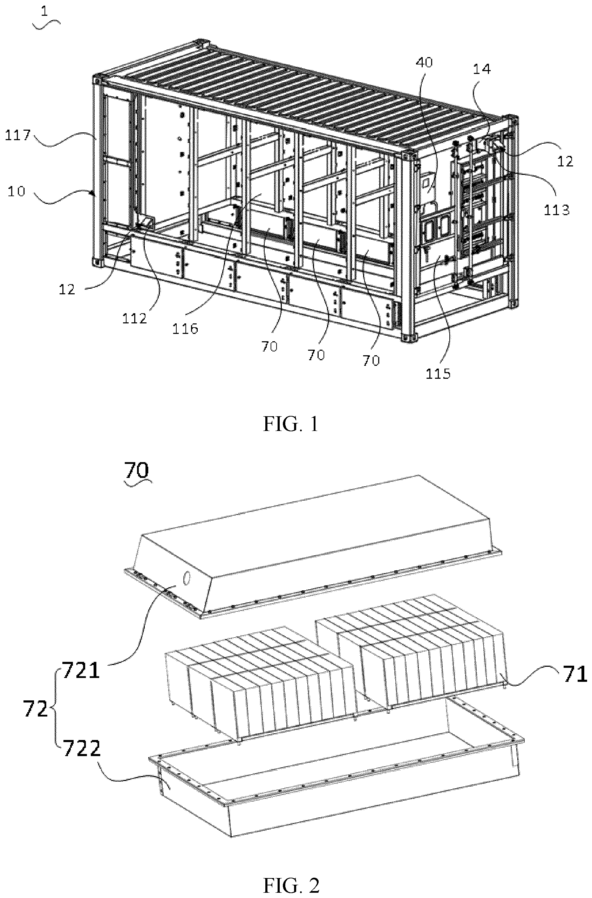

Refer to FIG. 1. Currently, judged by the development of the market, applications of energy storage systems 1 which are capable of storing and supplying electrical energy, are becoming increasingly extensive. Such energy storage systems 1 are not only used in energy storage devices such as hydroelectric, thermal, wind, and solar power plants, but also widely applied in electric vehicles such as electric bicycles, electric motorcycles, and electric cars, as well as in various fields like military equipment and aerospace. With the continuous expansion of application areas of the energy storage systems 1, market demands for them are also constantly increasing.

Also refer to FIG. 2. The energy storage system 1 usually includes a housing 10 and multiple battery modules 70, all the battery modules 70 being housed within the housing 10 for storage and supply of electric energy. Each battery module 70 includes a battery cell 71 and a box 72, the battery cell 71 being housed within the box 72. The box 72 provides a space for accommodating the battery cell 71 and may adopt various structures.

In some embodiments, the box 72 may include a first part 721 and a second part 722. The first part 721 and the second part 722 are mutually overlapped. The first part 721 and the second part 722 together define the space for accommodating the battery cell 71. The second part 722 may be a hollow structure with one end open, the first part 721 may be a plate-like structure, and the first part 721 overlaps the open end of the second part 722, thereby defining the accommodation space together. Alternatively, both the first part 721 and the second part 722 may be hollow structures with an opening on one end. The opening of the first part 721 overlaps the opening of the second part 722. Certainly, the box 72 formed by the first part 721 and the second part 722 may be in various shapes, such as cylindrical or rectangular shapes.

As a single or multiple battery modules 70 operate for a long time, the battery module(s) 70 in operation are prone to a thermal runaway. During the thermal runaway, combustible gas (such as H2, CO, and CH4) accumulates and explodes within the housing 10, leading to a serious safety incident. Therefore, how to implement an explosion-proof design for the energy storage system 1 is particularly important.

It is known that a traditional explosion-proof method involves an installation of a ventilation fan and a collection component within the housing 10. The collection component and the ventilation fan are both electrically connected to an external terminal. The collection component collects the concentration of combustible gas within the housing 10 and provides feedback to the external terminal. When the concentration collected by the collection component reaches or exceeds a specified threshold, the external terminal controls the operation of the ventilation fan to drive external airflow out through the interior of the housing 10. This enhances air convection between external environment and the interior of the housing 10, thereby helping to reduce the concentration of combustible gas inside the housing 10.

The applicant has noticed that when the battery module 70 experiences a thermal runaway, if the traditional method of using a ventilation fan and a collection component to discharge combustible gas from the housing 10 is adopted, the diversion effect of a single ventilation fan is relatively weak. As a result, the discharge efficiency of combustible gas is relatively low, and there is still an explosion risk in the energy storage system 1.

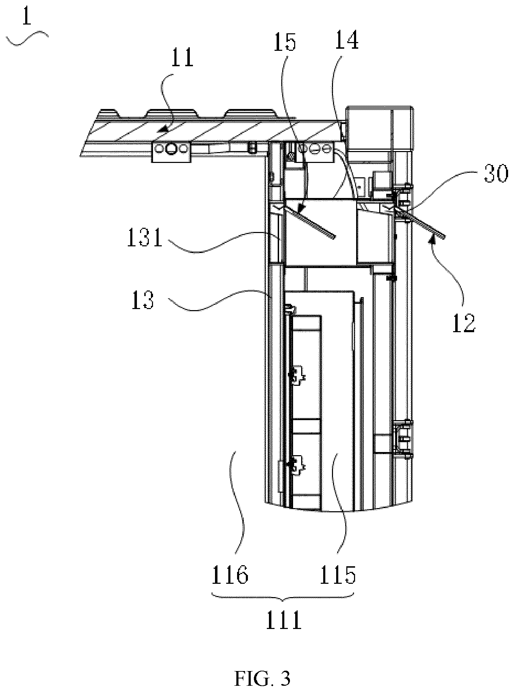

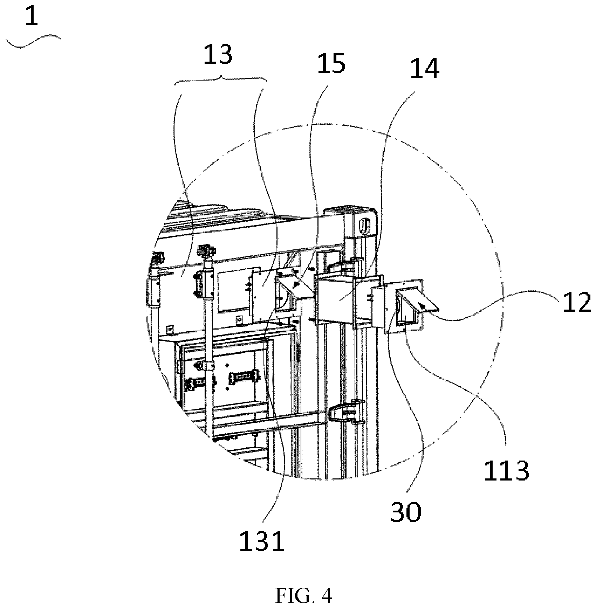

Refer to FIGs. 3, 4, and 5. In order to reduce an explosion-proof risk of the energy storage system 1, the applicant has carefully studied and found that an air intake fan 20 and an air exhaust fan 30 may be installed on the housing 10, and a detection component may be installed on the housing 10 to detect the concentration of combustible gas within the housing 10 in real time. When the concentration of combustible gas reaches or exceeds a minimum value of a specified range, the air intake fan 20 is activated to drive the external airflow into the housing 10, and the air exhaust fan 30 is activated to drive airflow inside the housing 10 to the outside. With a synergistic effect between the air intake fan 20 and the air exhaust fan 30, the external airflow can be efficiently driven into the housing 10, and the airflow inside the housing 10 can quickly be discharged to the outside. As a result, the explosion-proof risk of the entire energy storage system 1 is significantly reduced.

Against a backdrop of increasing safety requirements for the energy storage system 1, the energy storage system 1 provided in this application can promptly and efficiently discharge combustible gas from the housing 10 when the gas concentration exceeds a standard. This is of great significance in a field of batteries.

The specified range may be set according to a specific requirement, as long as it ensures that the energy storage system 1 does not experience a thermal runaway when the concentration of combustible gas is below the minimum value of the specified range.

The energy storage system 1 provided in this application includes multiple battery modules 70, the housing 10, the detection component, the air intake fan 20, and the air exhaust fan 30. The housing 10 is provided with an air inlet 112 and an air outlet 113. All the battery modules 70 are housed inside the housing 10, and the detection component, the air intake fan 20, and the air exhaust fan 30 are all coupled to the housing 10. The detection component is configured to detect the concentration of combustible gas within the housing 10, the air intake fan 20 is configured to drive the external airflow into the housing 10 through the air inlet 112, and the air exhaust fan 30 is configured to drive the airflow within the housing 10 to be discharged to the outside through the air outlet 113. Both the air intake fan 20 and the air exhaust fan 30 are configured to start up when the concentration of combustible gas reaches or exceeds the minimum value of the specified range.

During a power supply process of the energy storage system 1, the detection component detects the concentration of combustible gas within the housing 10 in real time. When the concentration reaches or exceeds the minimum value of the specified range, both the air intake fan 20 and the air exhaust fan 30 start up. The air intake fan 20 drives the external airflow into the housing 10, and the air exhaust fan 30 guides the airflow and the combustible gas inside the housing 10 to be discharged to the outside. The presence of the air intake fan 20 and the air exhaust fan 30 can accelerate the discharge of the combustible gas from the housing 10, improving the discharge efficiency.

In one embodiment, the energy storage system 1 further includes a controller 40, the controller 40 being configured to control the air intake fan 20 and the air exhaust fan 30 to start up when the concentration of combustible gas reaches or exceeds the minimum value of the specified range. The controller 40 is electrically connected to the detection component, the air intake fan 20, and the air exhaust fan 30. The detection component provides real-time feedback of the detected concentration of combustible gas to the controller 40. When the feedback from the detection component indicates that the concentration of combustible gas reaches or exceeds the minimum value of the specified range, the controller 40 controls the air intake fan 20 and air exhaust fan 30 to start up.

Therefore, the external airflow can enter the housing 10 through the air inlet 112 and drive the discharge of the combustible gas inside the housing 10 to the outside. As a result, the concentration of combustible gas inside the housing 10 is reduced, preventing the accumulation and explosion of combustible gas. Additionally, during this process, heat within the housing 10 can also be dissipated, helping to prevent the thermal runaway caused by a heat accumulation within the housing 10. In this embodiment, due to the presence of the controller 40, the operation of the entire energy storage system 1 does not require manual monitoring, thereby facilitating realization of automated explosion prevention for the energy storage system 1.

Of course, control of the air intake fan 20 and air exhaust fan 30 may not be limited to the foregoing method. In some other embodiments, a display screen and a control button may be set on the housing 10. The display screen is electrically connected to the detection component, and the control button is electrically connected to the air intake fan 20 and air exhaust fan 30. The detection component displays the detected concentration of combustible gas on the display screen, and when the concentration of combustible gas reaches or exceeds the minimum value of the specified range, the user can press the control button to start up the air intake fan 20 and the air exhaust fan 30.

In some embodiments, the energy storage system 1 includes a fire extinguishing component, which is coupled to the housing 10 and electrically connected to the controller 40. The controller 40 is configured to control the fire extinguishing component to perform a fire extinguishing operation within the housing 10 when the concentration of combustible gas exceeds a maximum value of the specified range.

In some embodiments, the fire extinguishing component may be a water sprayer, a dry powder extinguisher, a foam extinguisher, or the like.

When a thermal runaway occurs in the battery module 70 within the housing 10, the concentration of combustible gas inside the housing 10 may exceed the maximum value of the specified range, which can easily lead to an explosion and combustion of the battery module 70. By setting the controller 40 to control the fire extinguishing component to perform the fire extinguishing operation within the housing 10, the fire in the housing 10 can be effectively and promptly controlled and temperature in the housing 10 can be reduced, so as to prevent the fire from spreading and causing a serious safety incident.

In one embodiment, the housing 10 further includes an open-close door 12 positioned at the air inlet 112 and/or the air outlet 113. The open-close door 12 is configured to open the corresponding air inlet 112 and/or air outlet 113 when the concentration of combustible gas reaches or exceeds the minimum value of the specified range.

When the energy storage system 1 is properly supplying power, all the open-close doors 12 remain closed, collectively preventing external moisture, dust, and the like from entering the housing 10, so as to avoid the moisture and dust affecting the operation of the battery module 70. When the concentration of combustible gas inside the housing 10 reaches or exceeds the minimum value of the specified range, all the open-close doors 12 open to ensure an airflow exchange between the inside and outside of the housing 10. Therefore, the opening and closing of the open-close door 12 based on the concentration of combustible gas inside the housing 10 ensures a proper power supply of the energy storage system 1 and its airflow exchange with the external environment.

In some embodiments, there may be one open-close door 12, and this open-close door 12 is configured to open or close the air inlet 112 or the air outlet 113.

In some embodiments, there may be two open-close doors 12, with the open-close doors 12 positioned at the air inlet 112 and the air outlet 113, respectively.

When the energy storage system 1 is properly supplying power, all the open-close doors 12 are closed, creating a sealed space within the housing 10 to accommodate the battery module 70 and prevent the external moisture and dust from entering the housing 10.

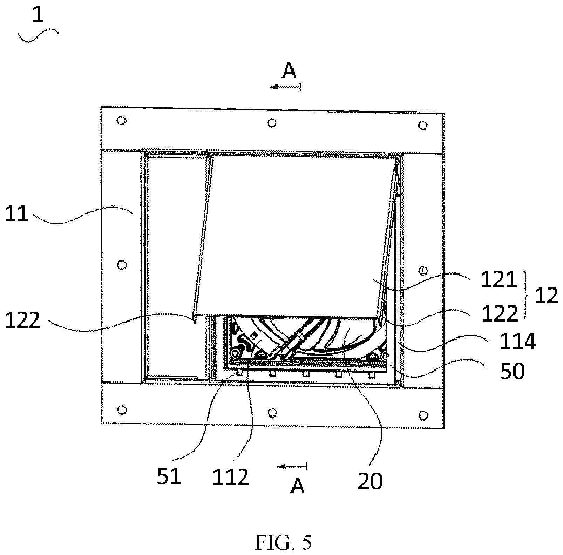

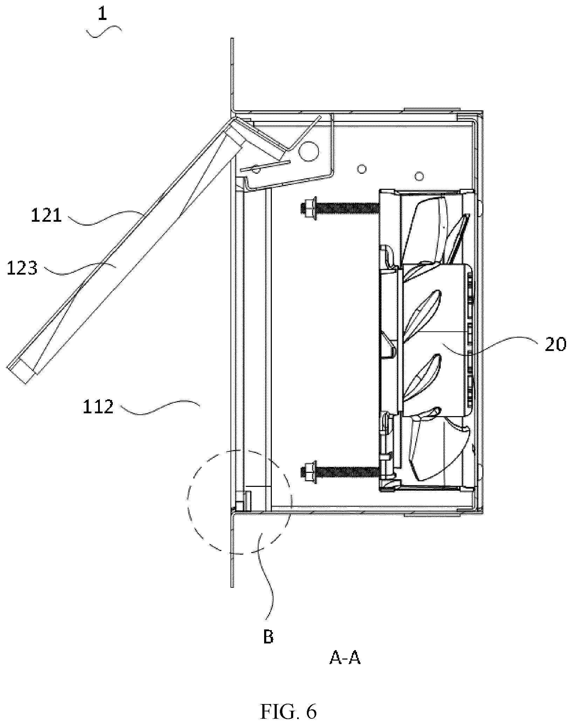

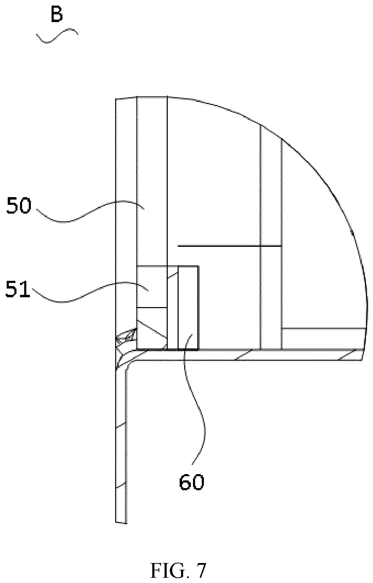

Refer to FIG. 5 again, and also refer to FIGs. 6 and 7. In some embodiments, the energy storage system 1 further includes a sealing component 50, the sealing component 50 being positioned around an outer periphery of the air inlet 112 and/or air outlet 113 having the open-close door 12. The sealing component 50 seals between the housing 10 and the open-close door 12 at the air inlet 112 and/or air outlet 113 where the sealing component 50 is currently located when the concentration of combustible gas is below the minimum value of the specified range.

When the energy storage system 1 is properly supplying power, the concentration of combustible gas inside the housing 10 is below the minimum value of the specified range. The housing 10 and the open-close door 12 positioned at the air inlet 112 and/or the air outlet 113 are sealed using the sealing component 50 to prevent the external moisture and dust from entering the housing 10. When the concentration of combustible gas inside the housing 10 reaches or exceeds the maximum value of the specified range, all the open-close doors 12 open, and the sealing component 50 loses its sealing function.

In some embodiments, if the open-close door 12 is only provided at either the air inlet 112 or the air outlet 113, then one sealing component 50 is provided and positioned in a peripheral direction around the air inlet 112 or air outlet 113 having the open-close door 12.

In some embodiments, the open-close door 12 is provided at both the air inlet 112 and air outlet 113, and two sealing components 50 are provided corresponding to the two open-close doors 12. One of the sealing components 50 is positioned in a peripheral direction around the air inlet 112, and the other sealing component 50 is positioned in a peripheral direction around the air outlet 113.

When the concentration of combustible gas inside the housing 10 is below the minimum value of the specified range, the two open-close doors 12 close the air inlet 112 and the air outlet 113 respectively, and each sealing component 50 seals between the corresponding open-close door 12 and the housing 10, completely isolating the moisture and dust outside the housing 10.

In some embodiments, a surface of the housing 10 is provided with a slot 114, the slot 114 being arranged around an outer periphery of the sealing component 50 and extending along the outer periphery of the sealing component 50. The open-close door 12 includes a door body 121 and a flange 122 protruding from one side of the door body 121. The flange 122 is engaged within the corresponding slot 114 when the open-close door 12 is closed relative to the air inlet 112 or air outlet 113 where the open-close door 12 is currently located.

In some embodiments, the slot 114 is provided around the outer periphery of each sealing component 50, and the flange 122 is provided on the open-close door 12 corresponding to each sealing component 50.

The cooperation between the flange 122 and the slot 114 further enhances the close cooperation between the open-close door 12 where the flange 122 is located and the housing 10, ensuring that the sealing component 50 corresponding to the open-close door 12 can securely clamp between the door body 121 of the open-close door 12 and the housing 10.

It is worth mentioning that, to reduce a possibility of the flange 122 disengaging from the slot 114, when the flange 122 is engaged within the corresponding slot 114, it is necessary to ensure that at least one side of the flange 122 is in contact with a wall of the slot 114, providing a relatively large contact area between the flange 122 and the wall of the slot 114.

In some embodiments, depth of the slot 114 is greater than width of the corresponding flange 122. Therefore, when each open-close door 12 closes the corresponding air inlet 112 or air outlet 113, the flange 122 of the open-close door 12 can be fully engaged within the corresponding slot 114. This ensures a tighter cooperation between the flange 122 and the slot 114, preventing the flange 122 from disengaging from the slot 114.

In one embodiment, radial width of the slot 114 is further greater than thickness of the corresponding flange 122.

Each flange 122 has a first side surface and a second side surface arranged opposite to each other along its thickness direction. The slot 114 has a first slot wall and a second slot wall arranged along its radial direction. The first side surface faces the first slot wall, and the second side surface faces the second slot wall. When the flange 122 corresponding to each slot 114 is engaged within the corresponding slot 114, the first side surface of the flange 122 can be in contact with the first slot wall, and the second side surface is separated from the second slot wall. In this embodiment, during rainy weather, rainwater can flow to the outside through the gap between the second side surface and the second slot wall, preventing the accumulation of rainwater in the slot 114 and its penetration into the housing 10.

In one embodiment, the energy storage system 1 further includes a magnetic component 60. When the concentration of combustible gas inside the housing 10 is below the minimum value of the specified range, the open-close door 12 is configured to be magnetically attracted to the housing 10 under an action of the corresponding magnetic component 60. As a result, each open-close door 12 can reliably close the air inlet 112 or air outlet 113.

In some embodiments, part of all the open-close doors 12 can be magnetically attracted to the housing 10 under the action of their corresponding magnetic components 60. In other embodiments, each open-close door 12 has a corresponding magnetic component 60, and each open-close door 12 can be magnetically attracted to the housing 10 under the action of its corresponding magnetic component 60.

In one embodiment, each open-close door 12 is a metal component and each open-close door 12 corresponds to multiple magnetic components 60 and is magnetically attracted to the housing 10 under the action of all the corresponding magnetic components 60. On the sealing components 50 corresponding to each open-close door 12, multiple notches 51 are provided. All the magnetic components 60 and all the notches 51 corresponding to the same open-close door 12 are matched in a one-to-one manner. Each magnetic component 60 is coupled to the housing 10 and magnetically attracts its corresponding open-close door 12 through the corresponding notch 51.

In one embodiment, an insulation layer 123 is provided on a surface of each open-close door 12 facing the air inlet 112 or the air outlet 113. The presence of the insulation layer 123 significantly reduces the speed at which heat from the housing 10 diffuses to the outside through each open-close door 12. As a result, the housing 10 can maintain a suitable temperature for the battery module 70 to properly supply power.

Refer to FIGs. 1, 3, and 4 again. In one embodiment, the housing 10 includes a housing body 11, a partition plate 13, an exhaust duct 14, and a blocking door 15. The partition plate 13 divides the housing body 11 into an electrical compartment 115 and a battery compartment 116. The battery compartment 116 accommodates the battery module 70, and the electrical compartment 115 accommodates electrical components other than the battery module 70, such as the controller 40 and the fire extinguishing component. The partition plate 13 is provided with a communicating opening 131, the exhaust duct 14 passes through the communicating opening 131, the electrical compartment 115, and the air outlet 113 in sequence and communicates with the battery compartment 116 and the outside, and the blocking door 15 is coupled to the partition plate 13 and is configured to open and close the communicating opening 131.

The housing body 11 has an accommodation compartment 111, and the partition plate 13 is located within the accommodation compartment 111 to divide the accommodation compartment 111 into the electrical compartment 115 and the battery compartment 116. The detection component is configured to detect the concentration of combustible gas within the battery compartment 116, and the controller 40 is configured to open and close the blocking door 15. When the concentration of combustible gas within the battery compartment 116 is below the minimum value of the specified range, the controller 40 controls the blocking door 15 to close, isolating the electrical compartment 115 and the battery compartment 116 from each other. The battery module 70 supplies power within the battery compartment 116, and the electrical components operate within the electrical compartment 115, with no interference between the battery module 70 and the electrical components. When the concentration of combustible gas within the battery compartment 116 reaches or exceeds the minimum value of the specified range, the controller 40 controls the blocking door 15 to open, allowing the combustible gas within the battery compartment 116 to be discharged to the outside through the exhaust duct 14 and the air outlet 113.

The housing body 11 is a hollow structure and may be formed by an enclosure of a top plate, a bottom plate, and a side plate between the top plate and the bottom plate. Alternatively, the housing body 11 may be formed by an enclosure of a frame 117 and a cladding layer that covers an outer surface of the frame 117.

In the foregoing energy storage system 1, during an energy supply process of the energy storage system 1, the detection component detects the concentration of combustible gas inside the housing 10 in real time. When the concentration of combustible gas reaches or exceeds the minimum value of the specified range, both the air intake fan 20 and the air exhaust fan 30 start up. The air intake fan 20 drives the external airflow into the housing 10, and the air exhaust fan 30 guides the airflow and the combustible gas within the housing 10 to be discharged to the outside. The presence of the air intake fan 20 and the air exhaust fan 30 can accelerate the discharge of the combustible gas from the housing 10, improving the discharge efficiency.

Technical features in the foregoing embodiments may be combined in any way. For brevity of description, possible combinations of the technical features in the foregoing embodiments are not described all. However, as long as there is no contradiction among combinations of these technical features, all the combinations should be considered as falling within the scope of this specification.

The foregoing embodiments only represent several implementations of this application, and descriptions thereof are specific and detailed, but should not be construed as a limitation on the scope of this application. It should be noted that those of ordinary skill in the art may further make modifications and improvements without departing from the concept of this application, and all such modifications and improvements also fall within the protection scope of this application.

## Claims

1. An energy storage system (1), comprising:
a housing (10) with an air inlet (112) and an air outlet (113);
a detection component, coupled to the housing (10), and configured to detect a concentration of combustible gas within the housing (10); and
an air intake fan (20) and an air exhaust fan (30), both coupled to the housing (10); wherein the air intake fan (20) is configured to drive external airflow into the housing (10) through the air inlet (112), and the air exhaust fan (30) is configured to drive airflow within the housing (10) out through the air outlet (113);
wherein the air intake fan (20) and the air exhaust fan (30) are both configured to start up when the concentration of combustible gas reaches or exceeds a minimum value of a specified range.

2. The energy storage system (1) according to claim 1, wherein the energy storage system (1) comprises a controller (40), the controller (40) being configured to control the start-up of the air intake fan (20) and the air exhaust fan (30) when the concentration of combustible gas reaches or exceeds the minimum value of the specified range.

3. The energy storage system (1) according to claim 2, wherein the energy storage system (1) comprises a fire extinguishing component coupled to the housing (10) and electrically connected to the controller (40);
wherein the controller (40) is configured to control the fire extinguishing component to perform a fire extinguishing operation within the housing (10) when the concentration of combustible gas exceeds a maximum value of the specified range.

4. The energy storage system (1) according to any one of claims 1 to 3, wherein the housing (10) further comprises an open-close door (12) positioned at the air inlet (112) and/or the air outlet (113), the open-close door (12) being configured to open the corresponding air inlet (112) and/or air outlet (113) when the concentration of combustible gas reaches or exceeds the minimum value of the specified range.

5. The energy storage system (1) according to claim 4, wherein the energy storage system (1) further comprises a sealing component (50), the sealing component (50) being positioned around an outer periphery of the air inlet (112) and/or air outlet (113) having the open-close door (12), wherein the sealing component (50) seals between the housing (10) and the open-close door (12) at the air inlet (112) and/or air outlet (113) where the sealing component (50) is currently located when the concentration of combustible gas is below the minimum value of the specified range.

6. The energy storage system (1) according to claim 5, wherein a surface of the housing (10) is provided with a slot (114), the slot (114) being arranged around an outer periphery of the sealing component (50); and the open-close door (12) comprises a door body (121) and a flange (122) protruding from one side of the door body (121), wherein the flange (122) is engaged within the corresponding slot (114) when the open-close door (12) is closed relative to the air inlet (112) or air outlet (113) where the open-close door (12) is currently located.

7. The energy storage system (1) according to claim 6, wherein depth of the slot (114) is greater than width of the corresponding flange (122).

8. The energy storage system (1) according to any one of claims 4 to 7, wherein an insulation layer (123) is provided on a surface of each open-close door (12) facing the air inlet (112) or the air outlet (113).

9. The energy storage system (1) according to any one of claims 4 to 8, further comprising a magnetic component (60), wherein the open-close door (12) is configured to be magnetically attracted to the housing (10) under an action of the corresponding magnetic component (60).

10. The energy storage system (1) according to any one of claims 1 to 9, wherein the housing (10) comprises a housing body (11), a partition plate (13), an exhaust duct (14), and a blocking door (15), wherein the partition plate (13) divides the housing body (11) into an electrical compartment (115) and a battery compartment (116); and
the partition plate (13) is provided with a communicating opening (131), the exhaust duct (14) passes through the communicating opening (131), the electrical compartment (115), and the air outlet (113) in sequence and communicates with the battery compartment (116) and the outside, and the blocking door (15) is coupled to the partition plate (13) and is configured to open and close the communicating opening (131).
